# EUROPEAN PATENT APPLICATION

(11) **EP 4 583 579 A1**
(43) Date of publication of application: **09.07.2025**
(21) Application number: 23876578.8
(22) Date of filing: 07.10.2023
(51) Int. Cl.: H04W 36/00

(54) **CELL HANDOVER METHOD AND APPARATUS**

(30) Priority: 10.10.2022 CN 202211236288
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN)
(74) Representative: Gill Jennings & Every LLP
(86) International application number: PCT/CN2023/123143
(87) International publication number: WO 2024/078375

(57) **Abstract**

This application provides a cell handover method and an apparatus, to improve accuracy of detecting unnecessary handover, and relates to the field of wireless communication technologies. **In** the method, a first network device receives handover request information from a second network device, where the handover request information is used to request to hand over a terminal device to a target cell to perform a first-type service. The first network device determines an unnecessary handover detection manner related to the first-type service. The first network device detects, based on the unnecessary handover detection manner, whether handover of the terminal device to the target cell is unnecessary handover. Handover of the terminal device to the target cell is inter-system handover triggered by a service type such as a voice service, and is not related to coverage and a mobility parameter of the network device. According to the foregoing solution, a probability that handover of the terminal device is incorrectly determined as unnecessary handover can be reduced, to avoid unnecessary and invalid optimization performed by the second network device on the mobility parameter, thereby saving communication resources, and improving communication efficiency.

## Description

### CROSS-REFERENCE TO RELATED APPLICATIONS

This application claims priority to Chinese Patent Application No. 202211236288.3, filed with the China National Intellectual Property Administration on October 10, 2022 and entitled "CELL HANDOVER METHOD AND APPARATUS", which is incorporated herein by reference in its entirety.

### TECHNICAL FIELD

This application relates to the field of wireless communication technologies, and in particular, to a cell handover method and an apparatus.

### BACKGROUND

Currently, voice policies vary based on different networking types. For example, in a standalone (standalone, SA) new radio (new radio, NR) network, when an NR cell does not support an NR voice solution (voice over NR, VoNR) that is based on an internet protocol (internet protocol, IP) multimedia subsystem (IP multimedia subsystem, IMS) network or when quality of a VoNR voice service in an NR cell is not ideal, a terminal needs to fall back (fallback) to a 2^{nd} generation mobile communication system (2^{nd} generation, 2G)/3^{rd} generation mobile communication system (3^{rd} generation, 3G)/4^{th} generation mobile communication system (4^{th} generation, 4G) cell, to perform a voice service, so that the voice service is performed normally. After the voice service ends, the terminal returns to the NR cell through fast return (fast return).

However, a case in which the terminal device performs inter-system handover through the foregoing voice fallback procedure may be incorrectly determined as unnecessary handover.

### SUMMARY

Embodiments of this application provide a cell handover method and an apparatus, to improve accuracy of detecting unnecessary handover.

According to a first aspect, a cell handover method is provided. The method may be performed by a first network device, or may be performed by a chip/chip system. In the method, the first network device receives handover request information from a second network device, where the handover request information is used to request to hand over a terminal device to a target cell managed by the first network device to perform a first-type service. The first network device uses a first radio access technology, and the second network device uses a second radio access technology. The first network device determines an unnecessary handover detection manner related to the first-type service. The first network device detects, based on the unnecessary handover detection manner, whether handover of the terminal device to the target cell is unnecessary handover.

In a possible implementation, the first-type service includes a service, for example, a voice service, that can be performed after the terminal device is handed over from the first network device to the second network device.

According to the foregoing solution, handover of the terminal device to the target cell is inter-system handover triggered by a procedure of the first-type service, and is not related to coverage and a mobility parameter of the network device. According to the foregoing solution, duration in which the terminal device performs the first-type service can be prevented from being counted into unnecessary handover detection time, and a probability that handover of the terminal device is incorrectly determined as unnecessary handover can be reduced, to avoid unnecessary and invalid optimization performed by the second network device on the mobility parameter, thereby saving communication resources, and improving communication efficiency.

In a possible implementation, the first network device receives first information from the second network device, where the first information is used to determine the unnecessary handover detection manner; and the first network device determines, based on the first information, the unnecessary handover detection manner.

According to the foregoing solution, the first network device may determine, based on the first information indicated by the second network device, the unnecessary handover detection manner, and the second network device controls the unnecessary handover detection manner. Because a service is initiated in the second network device, and the service triggers inter-system handover, a detection result of the unnecessary handover can meet a requirement of the second network device.

In a possible implementation, the first information includes an identifier of the first-type service and a first signal quality threshold corresponding to the identifier of the first-type service. The first network device determines, based on the first information, to detect, based on the first signal quality threshold, whether handover of the terminal device to the target cell is unnecessary handover. When signal quality of a cell using the second radio access technology is greater than or equal to the first signal quality threshold in a measurement periodicity, the first network device determines that handover of the terminal device to the target cell is unnecessary handover.

According to the foregoing solution, the corresponding first signal quality threshold is set for the first-type service, so that when the unnecessary handover is detected, detection may be performed based on first signal quality thresholds corresponding to different services. In this way, a possibility that handover of the terminal device to the target cell for service execution is incorrectly determined as unnecessary handover can be reduced.

In a possible implementation, the first network device receives a measurement report from the terminal device, where the measurement report includes a first measurement result, the first measurement result is signal quality of a cell using the second radio access technology, the first measurement result includes a third measurement result in duration of the first-type service and a second measurement result, and the second measurement result does not include the third measurement result; and the first information includes first indication information, and the first indication information indicates to use the second measurement result to detect whether handover of the terminal device to the target cell is unnecessary handover. The first network device determines, based on the first information, to detect, based on the second measurement result, whether handover of the terminal device to the target cell is unnecessary handover. When the signal quality included in the second measurement result is greater than or equal to a second signal quality threshold in a measurement periodicity, the first network device determines that handover of the terminal device to the target cell is unnecessary handover.

According to the foregoing solution, the first network device may detect, without using the measurement report in the duration of the first-type service, whether handover of the terminal device to the target cell is unnecessary handover. This prevents the duration of the first-type service from being counted into the detection time of the unnecessary handover, and improves accuracy of detecting the unnecessary handover.

In a possible implementation, the first network device receives a measurement report from the terminal device, where the measurement report includes a first measurement result, the first measurement result is signal quality of a cell using the second radio access technology, and the first measurement result includes a third measurement result in duration of the first-type service and a second measurement result. The first network device may detect, based on the second measurement result, whether handover of the terminal device to the target cell is unnecessary handover. When the signal quality included in the second measurement result is greater than or equal to a second signal quality threshold in a measurement periodicity, the first network device determines that handover of the terminal device to the target cell is unnecessary handover.

In a possible implementation, the first network device sends a first report to the second network device, where the first report indicates occurrence of the unnecessary handover, so that the second network device can adjust a mobility parameter based on the first report, where the first report includes related information of the first-type service, and the related information includes one or more of an identifier of the first-type service, start time of the first-type service, and end time of the first-type service.

In a possible implementation, the first network device receives second indication information from the second network device, where the second indication information indicates the related information of the conditional first-type service in the first report.

Based on the related information of the first-type service, the second network device may determine whether the mobility parameter needs to be adjusted. For example, when the first report includes the related information of the first-type service, the second network device may determine that handover of the terminal device to the target cell is triggered by performing the first-type service, that is, a procedure of the first-type service triggers the terminal device to perform inter-system handover; and is not related to coverage and the mobility parameter of the second network device. Therefore, the second network device may not optimize the mobility parameter.

In a possible implementation, the first network device sends first measurement configuration information to the terminal device after the first-type service ends, where the first measurement configuration information indicates the terminal device to measure signal quality of a cell using the second radio access technology.

According to the foregoing solution, the first network device may indicate, after the first-type service ends, the terminal device to measure the signal quality of the cell using the second radio access technology. Therefore, the first network device may detect, based on the measurement report obtained after the first-type service ends, whether unnecessary handover occurs. This avoids that handover that occurs in the duration of the first-type service is evaluated as unnecessary handover, reduces a probability that handover is incorrectly determined as unnecessary handover, and avoids unnecessary and invalid optimization performed by the second network device on the mobility parameter.

In a possible implementation, the first network device receives a third measurement result from the terminal device, where the third measurement result includes the signal quality of the cell using the second radio access technology; the first network device determines to detect, based on the third measurement result, whether handover of the terminal device to the target cell is unnecessary handover; and when the signal quality included in the third measurement result is greater than or equal to a second signal quality threshold in a measurement periodicity, the first network device determines that handover of the terminal device to the target cell is unnecessary handover.

According to the foregoing solution, the first network device may detect, based on the measurement report obtained after the first-type service ends, whether unnecessary handover occurs. This avoids that handover that occurs in the duration of the first-type service is evaluated as unnecessary handover, reduces a probability that handover is incorrectly determined as unnecessary handover, and avoids unnecessary and invalid optimization performed by the second network device on the mobility parameter.

In a possible implementation, the first network device sends second information to the terminal device, where the second information indicates that second measurement configuration information is invalid, and the second measurement configuration information indicates the terminal device to measure, in duration of the first-type service, the signal quality of the cell using the second radio access technology.

According to the foregoing solution, the first network device may indicate, to the terminal device, that the measurement configuration information is invalid, so that the terminal device does not measure, in the duration of the first-type service, the signal quality of the cell using the second radio access technology. Therefore, the first network device may detect, based on signal quality measured outside duration of a non-first-type service, whether unnecessary handover occurs, thereby improving accuracy of detecting the unnecessary handover.

In a possible implementation, the second information further indicates the terminal device to stop measuring the signal quality of the cell using the second radio access technology, and/or the second information further indicates the terminal device not to send a measurement report corresponding to the second measurement configuration information.

According to the foregoing solution, the first network device may indicate the terminal device to stop measuring, in the duration of the first service, the signal quality of the cell using the second radio access technology, and indicate the terminal device not to send the measurement report in the duration of the first service. Therefore, the first network device may detect, based on signal quality in duration of a non-first-type service, whether handover of the terminal device to the target cell is unnecessary handover, so that a detection result of the unnecessary handover is more accurate.

According to a second aspect, a cell handover method is provided. The method may be performed by a second network device, or may be performed by a chip/chip system. In the method, the second network device sends handover request information to a first network device, where the handover request information is used to request to hand over a terminal device to a target cell managed by the first network device to perform a first-type service. The first network device uses a first radio access technology, and the second network device uses a second radio access technology. The second network device sends first information to the first network device, where the first information is used to determine an unnecessary handover detection manner.

In a possible implementation, the first information includes an identifier of the first-type service and a first signal quality threshold corresponding to the identifier of the first-type service. The unnecessary handover detection manner includes: detecting, based on the first signal quality threshold, whether handover of the terminal device to the target cell is unnecessary handover.

In a possible implementation, the first information includes first indication information, the first indication information indicates to use a second measurement result to detect whether handover of the terminal device to the target cell is unnecessary handover, and the second measurement result does not include a measurement result in duration of the first-type service; and the unnecessary handover detection manner includes: detecting, based on the second measurement result, whether handover of the terminal device to the target cell is unnecessary handover.

In a possible implementation, the second network device receives a first report from the first network device, where the first report indicates occurrence of unnecessary handover, and the first report is used by the second network device to adjust a mobility parameter; and the first report includes related information of the first-type service, and the related information includes one or more of an identifier of the first-type service, start time of the first-type service, and end time of the first-type service.

In a possible implementation, the first information includes second indication information, and the second indication information indicates to add the related information to the first report.

According to a third aspect, a communication apparatus is provided. The communication apparatus includes a processing unit and a transceiver unit.

The transceiver unit is configured to receive handover request information from a second network device, where the handover request information is used to request to hand over a terminal device to a target cell managed by a first network device to perform a first-type service. The first network device uses a first radio access technology, and the second network device uses a second radio access technology. The processing unit is configured to determine an unnecessary handover detection manner related to the first-type service. The processing unit is further configured to detect, based on the unnecessary handover detection manner, whether handover of the terminal device to the target cell is unnecessary handover.

In a possible implementation, the transceiver unit is further configured to receive first information from the second network device, where the first information is used to determine the unnecessary handover detection manner. That the processing unit is configured to determine an unnecessary handover detection manner related to the first-type service specifically includes: determining the unnecessary handover detection manner based on the first information.

In a possible implementation, the first information includes an identifier of the first-type service and a first signal quality threshold corresponding to the identifier of the first-type service. That the processing unit is configured to determine the unnecessary handover detection manner based on the first information specifically includes: determining, based on the first information, to detect, based on the first signal quality threshold, whether handover of the terminal device to the target cell is unnecessary handover. That the processing unit is configured to detect, based on the unnecessary handover detection manner, whether handover of the terminal device to the target cell is unnecessary handover specifically includes: when signal quality of a cell using the second radio access technology is greater than or equal to the first signal quality threshold in a measurement periodicity, determining that handover of the terminal device to the target cell is unnecessary handover.

In a possible implementation, the transceiver unit is further configured to receive a measurement report from the terminal device, where the measurement report includes a first measurement result, the first measurement result is signal quality of a cell using the second radio access technology, the first measurement result includes a third measurement result in duration of the first-type service and a second measurement result, and the second measurement result does not include the third measurement result; and the first information includes first indication information, and the first indication information indicates to use the second measurement result to detect whether handover of the terminal device to the target cell is unnecessary handover. That the processing unit is configured to determine the unnecessary handover detection manner based on the first information specifically includes: determining, based on the first information, to detect, based on the second measurement result, whether handover of the terminal device to the target cell is unnecessary handover. That the processing unit is configured to detect, based on the determined unnecessary handover detection manner, whether handover of the terminal device to the target cell is unnecessary handover specifically includes: when the signal quality included in the second measurement result is greater than or equal to a second signal quality threshold in a measurement periodicity, determining that handover of the terminal device to the target cell is unnecessary handover.

In a possible implementation, the transceiver unit is further configured to receive a measurement report from the terminal device, where the measurement report includes a first measurement result, the first measurement result is signal quality of a cell using the second radio access technology, the first measurement result includes a third measurement result in duration of the first-type service and a second measurement result, and the second measurement result does not include the third measurement result. That the processing unit is configured to determine an unnecessary handover detection manner related to the first-type service specifically includes: determining to detect, based on the second measurement result, whether handover of the terminal device to the target cell is unnecessary handover. That the processing unit is configured to detect, based on the determined unnecessary handover detection manner, whether handover of the terminal device to the target cell is unnecessary handover specifically includes: when the signal quality included in the second measurement result is greater than or equal to a second signal quality threshold in a measurement periodicity, determining that handover of the terminal device to the target cell is unnecessary handover.

In a possible implementation, the transceiver unit is further configured to send a first report to the second network device, where the first report indicates occurrence of the unnecessary handover, and the first report is used by the second network device to adjust a mobility parameter; and the first report includes related information of the first-type service, and the related information includes one or more of an identifier of the first-type service, start time of the first-type service, and end time of the first-type service.

In a possible implementation, the transceiver unit is further configured to receive second indication information from the second network device, and the second indication information indicates to add the related information to the first report.

In a possible implementation, the transceiver unit is further configured to send first measurement configuration information to the terminal device after the first-type service ends, where the first measurement configuration information indicates the terminal device to measure signal quality of a cell using the second radio access technology.

In a possible implementation, the transceiver unit is further configured to receive a third measurement result from the terminal device, where the third measurement result includes the signal quality of the cell using the second radio access technology. That the processing unit is configured to determine an unnecessary handover detection manner related to the first-type service specifically includes: determining to detect, based on the third measurement result, whether handover of the terminal device to the target cell is unnecessary handover. That the processing unit is configured to detect, based on the unnecessary handover detection manner, whether handover of the terminal device to the target cell is unnecessary handover specifically includes: when the signal quality included in the third measurement result is greater than or equal to a second signal quality threshold in a measurement periodicity, determining that handover of the terminal device to the target cell is unnecessary handover.

In a possible implementation, the transceiver unit is further configured to send second information to the terminal device, where the second information indicates that second measurement configuration information is invalid, and the second measurement configuration information indicates the terminal device to measure, in duration of the first-type service, the signal quality of the cell using the second radio access technology.

In a possible implementation, the second information further indicates the terminal device to stop measuring the signal quality of the cell using the second radio access technology, and/or the second information further indicates the terminal device not to send a measurement report corresponding to the second measurement configuration information.

According to a fourth aspect, a communication apparatus is provided. The communication apparatus includes a processing unit and a transceiver unit.

The processing unit is configured to determine handover request information. The transceiver unit is configured to send the handover request information to a first network device, where the handover request information is used to request to hand over a terminal device to a target cell managed by the first network device to perform a first-type service. The first network device uses a first radio access technology, and a second network device uses a second radio access technology. The handover request information includes first information, and the first information is used to determine an unnecessary handover detection manner.

In a possible implementation, the first information includes an identifier of the first-type service and a first signal quality threshold corresponding to the identifier of the first-type service. The unnecessary handover detection manner includes: detecting, based on the first signal quality threshold, whether handover of the terminal device to the target cell is unnecessary handover.

In a possible implementation, the first information includes first indication information, the first indication information indicates to use a second measurement result to detect whether handover of the terminal device to the target cell is unnecessary handover, and the second measurement result does not include a measurement result in duration of the first-type service; and the unnecessary handover detection manner includes: detecting, based on the second measurement result, whether handover of the terminal device to the target cell is unnecessary handover.

In a possible implementation, the transceiver unit is further configured to receive a first report from the first network device, where the first report indicates occurrence of unnecessary handover, and the first report is used by the second network device to adjust a mobility parameter; and the first report includes related information of the first-type service, and the related information includes one or more of an identifier of the first-type service, start time of the first-type service, and end time of the first-type service.

In a possible implementation, the first information includes second indication information, and the second indication information indicates to add the related information to the first report.

According to a fifth aspect, a communication apparatus is provided. The communication apparatus may be the communication apparatus according to any one of the third aspect or the fourth aspect or the possible implementations of the third aspect or the fourth aspect in the foregoing embodiments, or a chip disposed in the communication apparatus according to any one of the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus performs the method performed by the first network device in any possible implementation of the first aspect, or the communication apparatus performs the method performed by the second network device in any possible implementation of the second aspect.

It should be understood that the communication interface may be implemented through an antenna, a feeder, a codec, and the like in the communication apparatus. Alternatively, if the communication apparatus is a chip disposed in a network device or a terminal device, the communication interface may be an input/output interface, for example, an input/output pin, of the chip. The communication apparatus may further include a transceiver, configured to perform communication between the communication apparatus and another device.

According to a sixth aspect, an embodiment of this application provides a chip system. The chip system includes a processor, and may further include a memory, configured to implement the method performed by the communication apparatus according to any one of the first aspect or the second aspect or the possible implementations of the first aspect or the second aspect. In a possible implementation, the chip system further includes a memory, configured to store program instructions and/or data. The chip system may include a chip, or may include a chip and another discrete component.

According to a seventh aspect, this application provides a computer-readable storage medium. The computer-readable storage medium stores a computer program or instructions; and when the computer program or the instructions are run, the method performed by the first network device or the second network device in the foregoing aspects is implemented.

According to an eighth aspect, a computer program product is provided. The computer program product includes a computer program code or instructions; and when the computer program code or the instructions are run, the method performed by the first network device or the second network device in the foregoing aspects is performed.

According to a ninth aspect, a communication apparatus is provided. The communication apparatus includes units or modules that perform the methods in the foregoing aspects.

According to a tenth aspect, a chip system is provided. The chip system includes a logic circuit and an input/output interface. The logic circuit is configured to perform the method performed by the first network device or the second network device. The input/output interface is configured to communicate with another apparatus.

For beneficial effect of the second aspect to the tenth aspect and the implementations of the second aspect to the tenth aspect, refer to descriptions of beneficial effect of the method in the first aspect and the implementations of the first aspect.

### BRIEF DESCRIPTION OF DRAWINGS

FIG. 1 is a diagram of a communication system according to an embodiment of this application;
FIG. 2A is a diagram of a type of cell handover;
FIG. 2B is a diagram of another type of cell handover;
FIG. 3A is a diagram of another type of cell handover;
FIG. 3B is a diagram of another type of cell handover;
FIG. 4 is an example flowchart of a cell handover method according to an embodiment of this application;
FIG. 5 is a diagram of an unnecessary handover detection manner according to an embodiment of this application;
FIG. 6 is a diagram of another unnecessary handover detection manner according to an embodiment of this application;
FIG. 7 is an example flowchart of another cell handover method according to an embodiment of this application;
FIG. 8 is an example flowchart of another cell handover method according to an embodiment of this application;
FIG. 9 is a diagram of a communication apparatus according to an embodiment of this application;
FIG. 10 is a diagram of another communication apparatus according to an embodiment of this application;
FIG. 11 is a diagram of another communication apparatus according to an embodiment of this application; and
FIG. 12 is a diagram of another communication apparatus according to an embodiment of this application.

### DESCRIPTION OF EMBODIMENTS

Technical solutions provided in embodiments of this application are described below with reference to accompanying drawings.

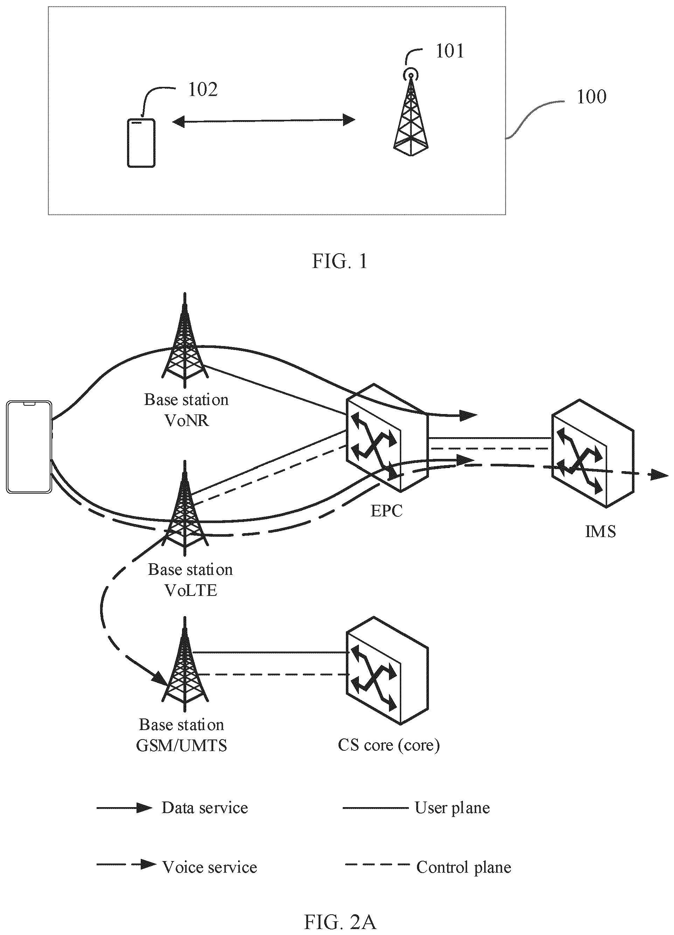

With reference to FIG. 1, the following describes a communication system to which the method provided in embodiments of this application is applicable. Refer to FIG. 1. The communication system 100 includes a network device 101 and a terminal device 102.

The terminal device in this application includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may be user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal) device, an access terminal (access terminal) device, a user terminal (user terminal) device, a user agent (user agent), a user device (user device), a satellite, an uncrewed aerial vehicle, a balloon, an airplane, or the like. For example, the terminal device may include a mobile phone (or referred to as a "cellular" phone), a computer having a mobile terminal device, a portable, pocket-sized, hand-held, or a computer-embedded mobile apparatus, or the like. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. By way of an example and not a limitation, in embodiments of this application, the terminal device may alternatively be a wearable device. The wearable device may also be referred to as a wearable intelligent device, an intelligent wearable device, or the like, and is a general term for wearable devices that are intelligently designed and developed for daily wear by using a wearable technology. If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

The network device in this application includes an access network (access network, AN) device, for example, a base station or an access point, and may be a device that communicates with a wireless terminal device through an air interface in an access network by using one or more cells, or a transmission point (transmission reception point, TRP), a transmitting point (transmission point, TP), a mobile switching center, a device that undertakes a base station function in device-to-device (Device-to-Device, D2D), vehicle-to-everything (vehicle-to-everything, V2X), and machine-to-machine (machine-to-machine, M2M) communication, and the like. Alternatively, the network device may be a road side unit (road side unit, RSU) in a vehicle-to-everything (vehicle-to-everything, V2X) technology. The network device may include an evolved NodeB (eNB or eNodeB, evolved NodeB) in a long term evolution (long term evolution, LTE) system or a long term evolution-advanced (long term evolution-advanced, LTE-A) system, or may include a next generation NodeB (next generation NodeB, gNB) in a new radio (new radio, NR) system, or may include an access network device in a future evolved communication system such as a 6^{th} generation (6^{th} generation, 6G). In addition, in a network structure, the network device may include a central unit (central unit, CU), a distributed unit (distributed unit, DU), or a CU and a DU. The access network device including the CU and the DU may split protocol layers of a base station. Functions of some protocol layers are centrally controlled by the CU, functions of some or all remaining protocol layers are distributed in the DU, and the CU centrally controls the DU. In addition, functions of the CU may be further divided. For example, a control plane (control plane, CP) and a user plane (user plane, UP) may be split, that is, a CU control plane (CU-CP) and a CU user plane (CU-UP) may be split. For example, the CU-CP and the CU-UP may be implemented by different functional entities, and the CU-CP and the CU-UP may be coupled to the DU to jointly implement functions of the network device. The CU-CP may also be divided into a CU-CP 1 and a CU-CP 2. The CU-CP 1 includes various radio resource management functions, and the CU-CP 2 includes only an RRC function and a function of control plane signaling at a packet data convergence protocol (packet data convergence protocol, PDCP) layer.

In embodiments of this application, an apparatus configured to implement a function of the terminal device may be a terminal device, or may be an apparatus that can support the terminal device to implement the function, for example, a chip system. The apparatus may be installed in the terminal device or used in a manner of matching the terminal device. In embodiments of this application, the chip system may include a chip, or may include a chip and another discrete component.

In embodiments of this application, an apparatus configured to implement a function of the network device may be a network device, or may be an apparatus that can support the network device to implement the function, for example, a chip system. The apparatus may be installed in the network device or used in a manner of matching the network device.

As one of core services of mobile communication networks, a voice service is a basic requirement of each generation communication network. Voice services of a 2^{nd} generation mobile communication system (2^{nd} generation, 2G) network and a 3^{rd} generation mobile communication system (3^{rd} generation, 3G) network mainly use a circuit switched (circuit switched, CS) voice solution. A 4^{th} generation mobile communication system (4^{th} generation, 4G) mainly uses two solutions: a long term evolution (long term evolution, LTE) voice solution (voice over LTE, VoLTE) and CS fallback (fallback) based on an IP multimedia subsystem (IP multimedia subsystem, IMS) network, to support the voice service. In a 5^{th} generation mobile communication system (5^{th} generation, 5G) era, in different stages of 5G network development, the 3^{rd} generation partnership project (3^{rd} generation partnership project, 3GPP) protocol defines non-standalone (non-standalone, NSA) and standalone (standalone, SA).

The SA networking includes only one new radio (new radio, NR) standard, namely, option 2 (option 2) networking. Voice policies vary based on different networking types. In an initial phase of NR network establishment, when an NR cell does not support an NR voice solution (voice over NR) based on an IMS network or when quality of a VoNR voice service in an NR cell is not ideal, a terminal device needs to fall back to a 4G/3G/2G cell, to perform a voice service, to ensure that the voice service is performed. After the voice service ends, the terminal device returns to the NR cell through fast return (fast return). The following describes voice policies in 5G networking scenarios.
1. In evolved universal terrestrial radio access (evolved universal terrestrial radio access, E-UTRA)-NR dual connectivity (E-UTRA-NR dual connectivity, EN-DC) networking, an LTE voice policy is used, and NR inter-system handover and redirection are not involved, that is, handover or redirection from an NR system to a 4G, 3G, or 2G system is not involved.

Refer to FIG. 2A. When an LTE network supports VoLTE, that is, when an IMS is deployed in the LTE network, the terminal device that supports a 5G network (which is a 5G terminal device for short below) may perform the voice service based on VoLTE in the LTE network. When the 5G terminal device is located at a coverage edge of an LTE cell, the voice service is handed over to a 2G or 3G network through single radio voice call continuity (single radio voice call continuity, SRVCC).

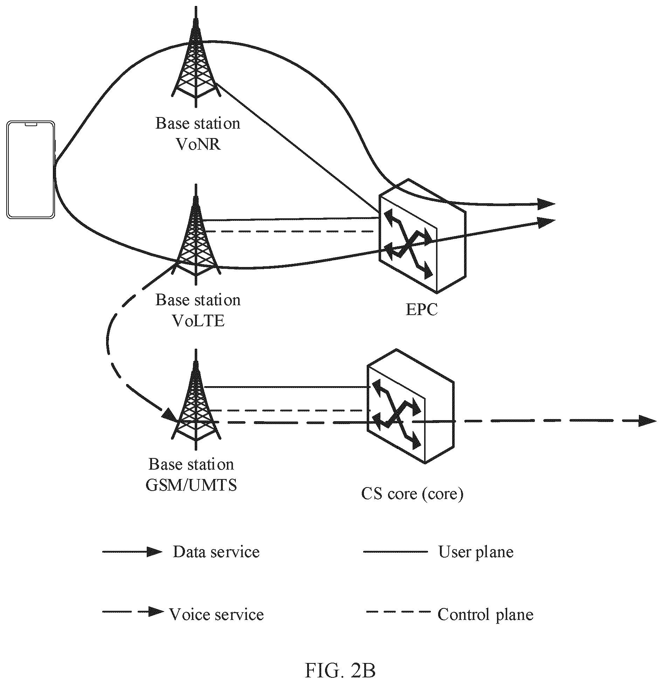

Refer to FIG. 2B. When an LTE network does not support VoLTE, that is, when an IMS is not deployed in the LTE network, a voice service of a 5G terminal device falls back to a 2G or 3G network through circuit switched fallback (circuit switched fallback, CSFB).

2. In a next generation radio access network (next generation radio access network, NG-RAN) E-UTRA-NR dual connectivity (NG-RAN E-UTRA-NR dual connectivity, NGEN-DC)/NR-E-UTRA dual connectivity (NR-E-UTRA dual connectivity, NE-DC)/SA networking, VoNR handover or redirection and voice fallback (voice fallback) are supported, to ensure that the voice service is performed and user experience is improved. There are three cases of voice fallback: inter-system fallback (inter-RAT fallback), evolved packet system (evolved packet system, EPS) fallback, and single radio voice call continuity (single radio voice call continuity, SRVCC). In the foregoing three cases, fallback is performed through handover or redirection from NR to an inter-standard network.

In the foregoing three cases, in NGEN-DC and NE-DC networking, an eNodeB is connected to a 5G core network (5G core, 5GC). In SA networking, the eNodeB is connected to an EPC. In the three scenarios, a gNodeB is connected to the 5GC.

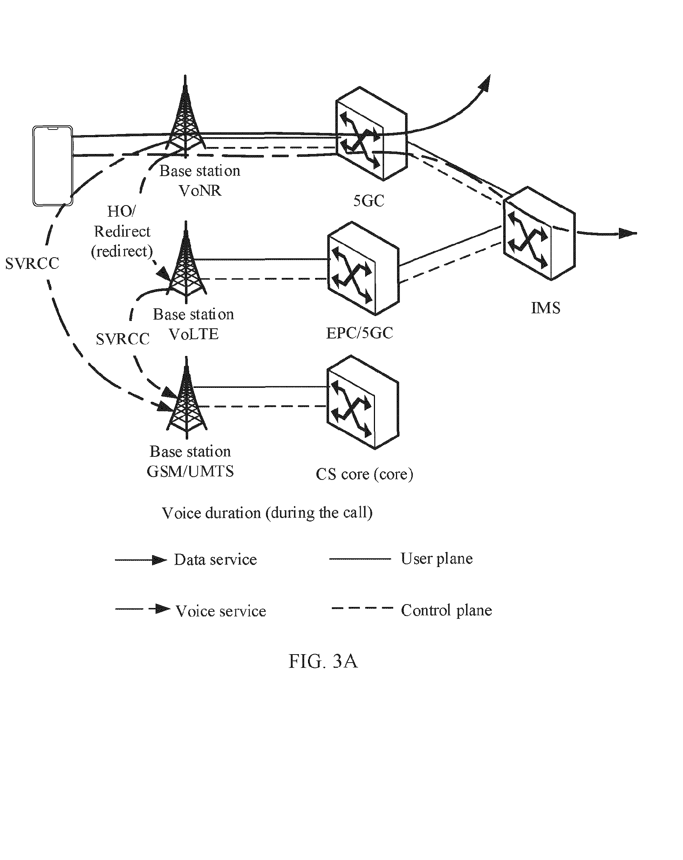

Refer to FIG. 3A. When a 5G network supports VoNR, a 5G terminal device performs a voice service based on the 5G network. When the 5G terminal device is located at a coverage edge of an NR cell, the voice service falls back to a 4G network through handover or redirection, or falls back to a 3G or 2G network through SRVCC. It may be understood that the foregoing handover or redirection is not voice fallback, but is handover or redirection performed because the 5G terminal device is located at the coverage edge and signal quality deteriorates.

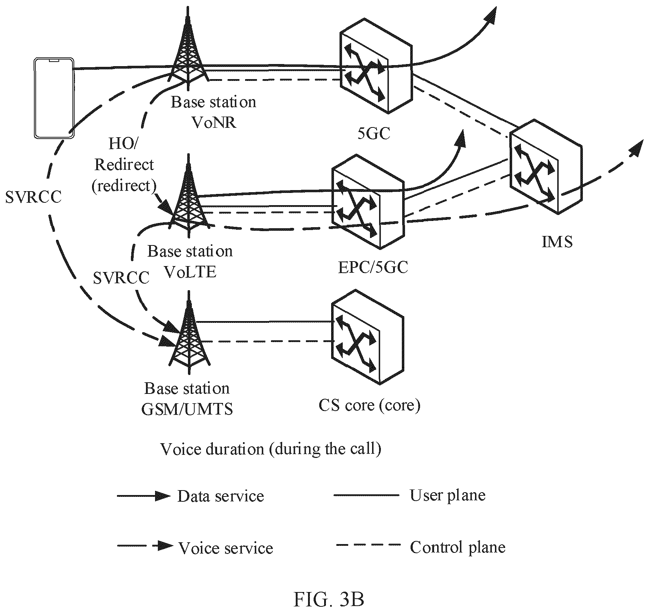

Refer to FIG. 3B. When a 5G network does not support VoNR, before a call is established, a 5G voice service falls back to a 4G network (for example, EPS fallback or inter-system fallback) in a handover or redirection manner, or falls back to a 3G or 2G network through SRVCC. When falling back to the 4G network, in NGEN-DC and NE-DC networking, the 5G terminal device performs inter-system fallback; and in SA networking, the 5G terminal device performs EPS fallback.

### 3. Fast return

A fast return function supports fast return of an NR-supported terminal device in an LTE network to an NR cell. After UE completes a voice service in a 4G, 3G, or 2G network and a voice service bearer is deleted, if it is determined that the UE does not have a "cannot be handed over" service, fast return is triggered to enable the UE to return to the NR cell. In the foregoing descriptions, the "cannot be handed over" service may be understood as a service that can be performed only in the 4G, 3G, or 2G network.

In a case of the voice policy in the foregoing 5G networking scenario, when the UE is handed over from a source NR network device to a target LTE network device, the source network device indicates additional coverage information to the target network device in a handover request. The information indicates the UE to continue to measure measurement time of the NR cell and a quality threshold corresponding to the NR cell after the UE is handed over to the target network device. After the UE accesses the target network device, the target network device determines, based on the coverage information indicated in the handover request, to configure, for the UE, a measurement configuration for measuring the NR cell. The target network device may send measurement configuration information to the UE. For example, the target network device may send the measurement configuration information to the UE by using an RRC message, for example, an RRC reconfiguration (RRC reconfiguration) message. The measurement configuration information may include content shown in Table 1.

**Table 1: Example of measurement configuration information**

| Content of measurement configuration information | Descriptions |
|---|---|
| Measurement object (measurement objects) | The measurement object is an object on which the terminal device performs measurement, and includes a synchronization signal and physical broadcast channel block (synchronization signal and physical broadcast channel block, SSB) frequency, an SSB subcarrier spacing, an SSB-based measurement timing configuration (SSB-based measurement timing configuration, SMTC), a trustlist cell, and a blocklist cell. |
| Measurement gap (measurement gaps) | The measurement gap is a time period during which the terminal device leaves a current frequency to perform measurement on another frequency, and is related to only inter-frequency measurement and inter-system measurement. |
| Reporting configuration (reporting configurations) | indicates standards for triggering reporting of a measurement report and a format of the measurement report. The standards for triggering reporting of the measurement report are classified into event-triggered reporting and periodically-triggered reporting based on a type. The event-triggered reporting includes a measurement event that meets a predefinition, and the periodical reporting is |
| | that the terminal device sends the measurement report at a specified report interval (report interval). |
| Triggering quantity (triggering quantity) | The triggering quantity is a policy for triggering event reporting. |
| Measurement identity (measurement identities, measurement ID) | The measurement ID combines the measurement object and the reporting configuration as a set. |

Table 1 shows the example of the measurement configuration information. In Table 1, the reporting configuration determines a reporting manner of the measurement report. There are three types of reporting manners: event-triggered one-time reporting, event-triggered periodical reporting, and periodical reporting. A specific reporting manner in which the terminal device reports the measurement report may be indicated by the target network device. For example, the target network device may perform indication by using the RRC message, for example, the RRC reconfiguration message. For example, the RRC reconfiguration message may include a measurement configuration (measconfig), and the measurement configuration may include a reporting configuration addition list (reportconfigtoaddmodlist) information element. The reporting configuration addition list may indicate the reporting manner in which the UE reports the measurement report.

The following separately describes the foregoing three types of reporting manners.

### 1. Event-triggered one-time reporting

When an entering threshold of a specific measurement event is met, that is, a measurement result of the specific measurement event meets the entering threshold, for a period of time (timeToTrigger), sending of the measurement report is triggered. After the measurement report is sent once, the procedure ends. In this case, a corresponding reporting configuration is as follows: The reporting type is "event" (reportType=eventTriggered), and a quantity of times of reporting is 1 (reportAmount=1). In this case, the terminal device ignores a value of the report interval (reportInterval), that is, the measurement report does not include the report interval.

### 2. Event-triggered periodical reporting

When an entering threshold of a specific measurement event is met for a period of time (timeToTrigger), sending of the measurement report is triggered. After sending of the measurement report is triggered, a timer (reportInterval) between a plurality of times of measurement and a counter (reportAmount) of a quantity of times of measurement are started. The procedure ends only when a quantity of times of reporting reaches a requirement. If the counter of the quantity of times of measurement is infinite (infinity), the UE periodically performs reporting. In this case, a corresponding reporting configuration is as follows: The reporting type is "event" (reportType=eventTriggered), the quantity of times of reporting is greater than one (reportAmount>1), and the report interval (reportInterval) can be set as required.

### 3. Periodical reporting

The UE sends the measurement report at a predefined report interval (reportInterval). In this case, a corresponding reporting configuration is as follows: The reporting type is "periodical" (reportType=periodical), the quantity of times of reporting is greater than one (reportAmount>1), and the report interval (reportInterval) can be set as required.

The UE may measure the measurement object based on the measurement configuration information. The measurement object may indicate an NR frequency, that is, the measurement configuration information may indicate to measure the NR cell. In addition, the UE sends one or more measurement reports to the target network device in the foregoing reporting manner of the measurement report. If the measurement result of the NR cell in all measurement reports in the foregoing measurement time is greater than a quality threshold, the target network device determines that this time of handover to the LTE system is inter-system unnecessary handover, and sends an unnecessary handover report to the source network device.

According to the foregoing unnecessary handover determining method, in duration in which the UE is handed over to the LTE cell through a voice fallback procedure until the voice service is completed, if NR system coverage is good enough, time of the voice service is counted into unnecessary handover time.

Embodiments of this application provide a cell handover method. In the method, when UE is handed over from a source network device to a target network device, the source network device may indicate, to the target network device, a service identifier and an unnecessary handover determining manner corresponding to the service identifier. Based on this, the target network device may determine, based on the unnecessary handover determining manner corresponding to the service identifier, whether the service identifier needs to be counted into unnecessary handover time, to determine whether this time of handover is unnecessary handover, so that the case in which this time of handover is determined as unnecessary handover because of a voice fallback service can be reduced or avoided.

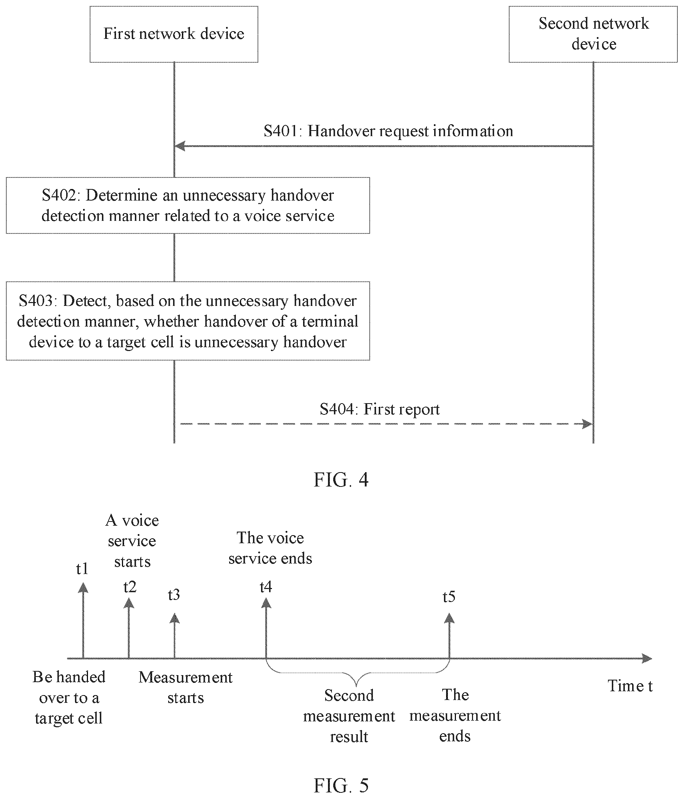

FIG. 4 is an example flowchart of a cell handover method according to an embodiment of this application. The method may include the following operations.

S401: A second network device sends handover request information to a first network device.

Correspondingly, the first network device receives the handover request information from the second network device.

The handover request information may be used to request to hand over a terminal device to a target cell to perform a first-type service, and the target cell may be a cell managed by the first network device.

It may be understood that the first-type service may include a voice service and another specific type of service. The following uses the voice service as an example for description.

In the foregoing descriptions, the first network device may be a target network device, and the second network device may be a source network device. The first network device may use a first radio access technology (radio access technology, RAT), and the second network device may use a second radio access technology different from the first radio access technology. The radio access technology may also be understood as a communication standard. It can be learned that the terminal device performs inter-standard handover or inter-system handover. For example, the first network device may use an LTE radio access technology, and the second network device may use an NR radio access technology. For another example, the first network device may use a 2G or 3G radio access technology, and the second network device may use an LTE radio access technology. Alternatively, the second network device may use an NR radio access technology, and the first network device may use a 2G or 3G radio access technology.

In a possible case, the terminal device may be handed over to the first network device to perform the voice service.

For example, when the second network device uses the NR radio access technology, the terminal device attempts to perform the voice service through the second network device, but the second network device does not support a VoNR voice service. Therefore, the second network device indicates the terminal device to be capable of being handed over to the first network device to perform the voice service, that is, the voice service of the terminal device may fall back to the first network device for execution. In this example, the first network device may use the LTE radio access technology, or the first network device may use the 2G or 3G radio access technology.

For another example, the second network device uses an LTE radio access technology, and the first network device may use a 2G or 3G radio access technology. The terminal device may perform the voice service through the second network device, but the second network device does not support a VoLTE voice service. Therefore, the terminal device may be handed over to the first network device to perform the voice service, that is, the voice service of the terminal device may fall back to the first network device for execution.

S402: The first network device determines an unnecessary handover detection manner related to the voice service.

The first network device may determine, based on an indication of the second network device, the unnecessary handover detection manner related to the voice service. Alternatively, the first network device may determine, by itself, the unnecessary handover detection manner related to the voice service.

S403: The first network device detects, based on the unnecessary handover detection manner, whether handover of the terminal device to the target cell is unnecessary handover.

The following describes the unnecessary handover detection manner by using Case 1 and Case 2 as examples.

Case 1: The first network device determines, by itself, the unnecessary handover detection manner related to the voice service.

Optionally, the unnecessary handover detection manner in Case 1 may be preconfigured or protocol-predefined. This is not specifically limited in this application. The first network device may determine the preconfigured or protocol-predefined unnecessary handover detection manner. The following describes, in Manner 1 and Manner 2, the unnecessary handover detection manner determined by the first network device.

Manner 1: The unnecessary handover detection manner includes: detecting, based on a second measurement result, whether handover of the terminal device to the target cell is unnecessary handover.

In a possible case, when the first network device receives the handover request information, the first network device may send measurement configuration information to the terminal device. For an implementation of the measurement configuration information, refer to Table 1. Details are not described herein again.

In this embodiment of this application, a measurement object in the measurement configuration information may include a frequency, the frequency corresponds to the second radio access technology, and the measurement configuration information may indicate the terminal device to measure signal quality of cells using the second radio access technology. It may be understood that these cells using the second radio access technology may be cells managed by the second network device. For example, if the measurement object in the measurement configuration information includes the frequency, and the frequency corresponds to the NR radio access technology, the measurement configuration information may indicate the terminal device to measure signal quality of cells using the NR radio access technology (referred to as "NR cells" for short). These NR cells may be cells managed by the second network device.

The terminal device may measure the measurement object based on the measurement configuration information, to obtain the signal quality of the cell using the second radio access technology. The terminal device may send a measurement report to the first network device, and the measurement report may include the signal quality of the cell using the second radio access technology.

The measurement report reported by the terminal device may include a first measurement result. The first measurement result is the signal quality of the cell using the second radio access technology. The first measurement result may include the second measurement result and a third measurement result. The third measurement result includes the signal quality, of the cell using the second radio access technology, that is measured by the terminal device in duration of the voice service. It may be understood that the second measurement result does not include the third measurement result. In other words, the second measurement result includes the signal quality, of the cell using the second radio access technology, that is measured by the terminal device outside the duration of the voice service. In other words, in Manner 1, the first network device may determine to detect, based on the signal quality, of the cell using the second radio access technology, that is included in the second measurement result, whether handover of the terminal device to the target cell is unnecessary handover.

For example, when the signal quality, of the cell using the second radio access technology, that is included in the second measurement result is greater than or equal to a second quality threshold in a first measurement periodicity, the first network device may consider that handover of the terminal device to the target cell is unnecessary handover. In the foregoing descriptions, the first measurement periodicity and the second quality threshold may be indicated by the second network device. For example, the handover request information may carry the first measurement periodicity and the second quality threshold, and the second measurement threshold may be a first measurement threshold, or may be a threshold that is set independently of a first measurement threshold.

According to the foregoing solution, the first network device may detect, without using the measurement report generated in the duration of the voice service, whether handover of the terminal device to the target cell is unnecessary handover. This prevents the duration of the voice service from being counted into the first measurement periodicity, reduces a probability that handover is incorrectly determined as unnecessary handover, and avoids unnecessary and invalid optimization performed by the second network device on a mobility parameter, thereby saving communication resources, and improving communication efficiency.

In the foregoing descriptions, the first measurement periodicity may be protocol-predefined, or determined by the second network device, or determined by the first network device. This is not specifically limited in this application. Similarly, the second quality threshold may be protocol-predefined, or determined by the second network device, or determined by the first network device. This is not specifically limited in this application.

Manner 1 is described below by using an example in which the first network device uses the LTE radio access technology and the second network device uses the NR radio access technology. FIG. 5 is a diagram of an unnecessary handover detection manner according to an embodiment of this application. The second network device may send the handover request information to the first network device, to request to hand over the terminal device to the target cell. The handover request information may include the first measurement periodicity and a second signal quality threshold. At a moment t1, the terminal device is handed over to the target cell. At a moment t2, the voice service is established; and at a moment t4, the voice service ends. The first network device may send the measurement configuration information to the terminal device, where the measurement configuration information indicates the terminal device to measure the signal quality of the NR cell. It may be understood that, in this embodiment of this application, an occasion at which the first network device sends the measurement configuration information to the terminal device is not specifically limited. The terminal device starts to perform measurement based on the measurement configuration information at a moment t3, and the measurement ends at a moment t5.

In a possible case, the terminal device may send a plurality of measurement reports to the first network device. The plurality of measurement reports may include a measurement report in a period from t3 to t4 and a measurement report in a period from t4 to t5. In Manner 1, the first network device may detect, by using the measurement report in the period from t4 to t5, whether handover of the terminal device to the target cell is unnecessary handover. For example, the signal quality, of the NR cell, that is included in the measurement report in the period from t4 to t5 is greater than or equal to the second signal quality threshold in the first measurement period. Therefore, the first network device may consider that handover of the terminal device to the target cell is unnecessary handover.

In another possible case, the terminal device may send one measurement report to the first network device. For example, the terminal device sends one measurement report to the first network device after t5. The measurement report includes signal quality of the NR cell in a period from t3 to t5. When detecting whether handover of the terminal device to the target cell is unnecessary handover, the first network device may not consider the signal quality of the NR cell in the period from t3 to t4. In other words, the first network device determines, based on the measurement report in the period from t4 to t5, that the signal quality of the NR cell in the first measurement periodicity is greater than or equal to the second signal quality threshold. Therefore, the first network device may consider that handover of the terminal device to the target cell is unnecessary handover.

Manner 2: The first network device sends the measurement configuration information to the terminal device after the voice service ends.

**In** a possible case, in duration of the voice service of the terminal device, the first network device does not start the terminal device to measure the signal quality of the cell using the second radio access technology. Alternatively, in duration of the voice service, the first network device may suspend the terminal device from measuring the signal quality of the cell using the second radio access technology. After the voice service of the terminal device ends, the first network device may send the measurement configuration information to the terminal device, to indicate the terminal device to measure the signal quality of the cell using the second radio access technology.

For example, the first network device may not send the measurement configuration information to the terminal device, so that the terminal device is not started to measure the signal quality of the cell using the second radio access technology.

For another example, the first network device may send second information to the terminal device, and the second information may indicate that second measurement configuration information is invalid. **In** an example, the first network device may send the second information to the terminal device by using an RRC message, for example, an RRC reconfiguration message.

**In** the foregoing descriptions, the second measurement configuration information may indicate the terminal device to measure, in the duration of the voice service, the signal quality of the cell using the second radio access technology. For example, a measurement periodicity corresponding to the second measurement configuration information includes the duration of the voice service. Therefore, it may be considered that the second measurement configuration information may indicate the terminal device to measure, in the duration of the voice service, the signal quality of the cell using the second radio access technology.

**In** a possible implementation, after the voice service ends, the first network device may send the measurement configuration information to the terminal device, and the measurement configuration information may indicate the terminal device to measure the signal quality of the cell using the second radio access technology. The terminal device may perform measurement based on the measurement configuration information, and send the measurement report to the first network device. The measurement report may include a fourth measurement result, and the fourth measurement result includes the signal quality of the cell using the second radio access technology. The first network device may determine to detect, based on the fourth measurement result, whether handover of the terminal device to the target cell is unnecessary handover.

For example, when the signal quality, of the cell using the second radio access technology, in the fourth measurement result is greater than or equal to a second quality threshold in a first measurement periodicity, the first network device may consider that handover of the terminal device to the target cell is unnecessary handover. In the foregoing descriptions, the first measurement periodicity and the second quality threshold may be indicated by the second network device. For example, the handover request information may carry the first measurement periodicity and the second quality threshold. Alternatively, the first measurement periodicity may be protocol-predefined, or determined by the second network device, or determined by the first network device. This is not specifically limited in this application. Similarly, the second quality threshold may be protocol-predefined, or determined by the second network device, or determined by the first network device. This is not specifically limited in this application.

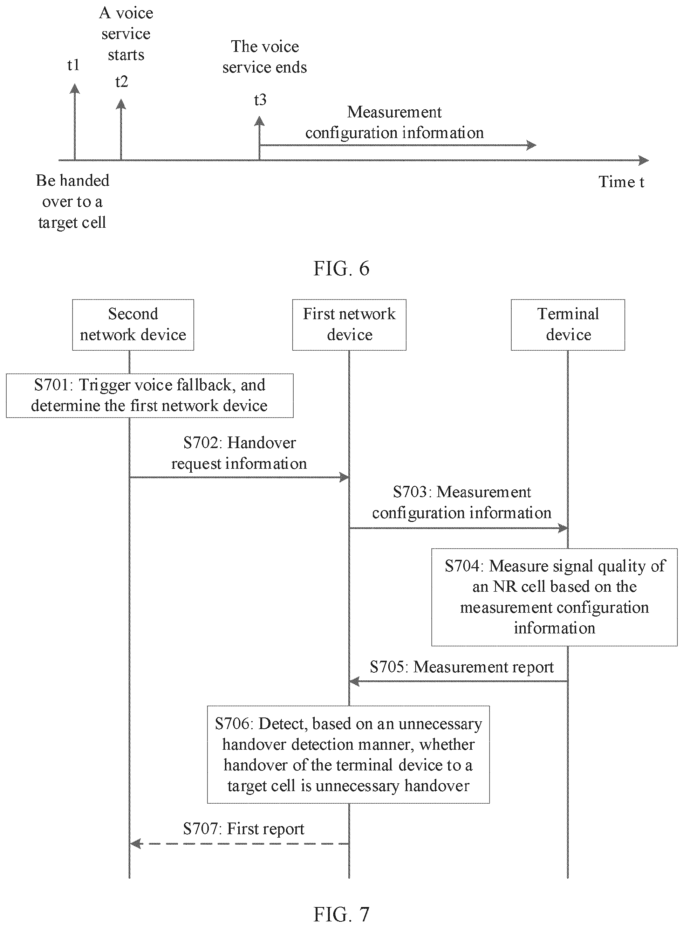

Manner 2 is described below by using an example in which the first network device uses the LTE radio access technology and the second network device uses the NR radio access technology. FIG. 6 is a diagram of an unnecessary handover detection manner according to an embodiment of this application. The second network device may send the handover request information to the first network device, to request to hand over the terminal device to the target cell. The handover request information may include the first measurement periodicity and a second signal quality threshold. At a moment t1, the terminal device is handed over to the target cell. At a moment t2, the voice service is established; and at a moment t3, the voice service ends.

The first network device may send the measurement configuration information to the terminal device after the moment t3, to indicate the terminal device to measure the signal quality of the NR cell. Optionally, assuming that the first network device sends the measurement configuration information to the terminal device before t3, to indicate the terminal device to measure the signal quality of the NR cell, the first network device may send the second information to the terminal device, to indicate that the second measurement configuration information is invalid.

After the voice service ends, the terminal device may measure the signal quality of the NR cell based on the foregoing measurement configuration information, and send one or more measurement reports to the first network device. The first network device may detect, based on the one or more measurement reports, whether handover of the terminal device to the target cell is unnecessary handover.

For example, in the one or more measurement reports, the signal quality of the NR cell in the first measurement periodicity is greater than or equal to the second signal quality threshold. Therefore, the first network device may consider that handover of the terminal device to the target cell is unnecessary handover.

According to the foregoing solutions, the first network device may indicate, after the voice service ends, the terminal device to measure the signal quality of the cell using the second radio access technology. Therefore, the first network device may detect, based on the measurement report obtained after the voice service ends, whether unnecessary handover occurs. This prevents duration of the voice service from being counted into the first measurement periodicity, reduces a probability that handover is incorrectly determined as unnecessary handover, and avoids unnecessary and invalid optimization performed by the second network device on a mobility parameter.

In Manner 1 and Manner 2 above, the first network device determines, by itself, the unnecessary handover detection manner.

In another implementation, the first network device may determine, based on an indication of the second network device, the unnecessary handover detection manner. For example, the second network device may send the first information to the first network device. Optionally, the first information may be carried in the handover request information. The first information may be used to determine the unnecessary handover detection manner. Therefore, the first network device may determine, based on the first information, the unnecessary handover detection manner. The following describes in detail by using Case 2.

Case 2: The first network device determines, based on the first information, the unnecessary handover detection manner related to the voice service.

In Case 2, the first information may include an identifier of the voice service or first indication information; and when content carried in the first information is different, the unnecessary handover detection manner is also different. The content carried in the first information is described below by using Example 1 and Example 2.

Example 1: The first information includes the identifier o the voice service.

The identifier of the voice service may be a quality of service class identifier (quality of service class identifier, QCI).

In a possible case, the first information may include the identifier of the voice service and a first signal quality threshold corresponding to the identifier of the voice service. In other words, the first signal quality threshold is associated with the voice service. Optionally, the first information may include identifiers of a plurality of services and a first signal quality threshold corresponding to an identifier of each service. In other words, the first signal quality threshold is related to the service, and is associated with the service.

A value of the first signal quality threshold may be protocol-predefined or preconfigured, or may be determined by the second network device. This is not specifically limited in this application. In addition, the second network device may further update the first signal quality threshold. Optionally, because the terminal device is handed over to the first network device to perform a service, for example, the voice service, the first signal quality threshold may be increased. For example, the quality threshold, of the NR cell, that is indicated by the second network device and that is used to detect unnecessary handover may be 10 dB higher than the quality threshold of the NR cell in which services are not distinguished. In this case, a probability that the information signal quality, of the NR cell, measured in the duration of the voice service is greater than or equal to the quality threshold of the NR cell is greatly reduced, so that difficulty of determining inter-system handover this time as unnecessary handover is increased, thereby reducing a possibility that handover of the terminal device to the target cell is incorrectly determined as unnecessary handover.

In Example 1, the unnecessary handover detection manner determined by the first network device may include: detecting, based on the first signal quality threshold, whether handover of the terminal device to the target cell is unnecessary handover.

For example, the first network device may send the measurement configuration information to the terminal device, and the measurement configuration information may indicate the terminal device to measure the signal quality of the cell using the second radio access technology. The terminal device may perform measurement based on the measurement configuration information, and send one or more measurement reports to the first network device. The first network device may detect, based on the one or more measurement reports and the first signal quality threshold, whether handover of the terminal device to the target cell is unnecessary handover.

For example, when the one or more measurement reports may include the signal quality of the cell using the second radio access technology, and the signal quality is greater than or equal to the first signal quality threshold in a first measurement periodicity, the first network device may consider that handover of the terminal device to the target cell is unnecessary handover.

In the foregoing descriptions, the first measurement periodicity may be indicated by the second network device. For example, the handover request information may include the first measurement periodicity. The first measurement periodicity may be not related to the service, or the first measurement periodicity may be universal to all services.

Optionally, in Example 1, the first information further includes a second measurement periodicity corresponding to the identifier of the voice service. In a possible case, the first information may include a second measurement periodicity corresponding to an identifier of each service in the identifiers of the plurality of services. In this embodiment of this application, the second measurement periodicity is related to the service, and may be associated with the service. It may be understood that the measurement periodicity included in the measurement configuration sent by the first network device to the terminal device, namely, the measurement periodicity used when the terminal device performs measurement, may be determined based on the second measurement periodicity. It may be understood that either the first measurement periodicity or the second measurement periodicity may be sent.

The first network device may detect, based on the first signal quality threshold and the second measurement periodicity, whether handover of the terminal device to the target cell is unnecessary handover. For example, when the one or more measurement reports may include the signal quality of the cell using the second radio access technology, and the signal quality is greater than or equal to the first signal quality threshold in a second measurement periodicity, the first network device may consider that handover of the terminal device to the target cell is unnecessary handover.

It may be understood that a value of the second measurement periodicity may be protocol-predefined or preconfigured, or may be determined by the second network device. This is not specifically limited in this application. In addition, the second network device may further update the second measurement periodicity. Optionally, because the terminal device is handed over to the first network device to perform a service, for example, the voice service, the second measurement periodicity may be increased. For example, the second measurement periodicity may be greater than the first measurement periodicity in which services are not distinguished, for example, is set to 30s, to reduce a possibility that handover of the terminal device to the target cell is incorrectly determined as unnecessary handover.

In an example, the measurement periodicity includes a timer (reportInterval) between two adjacent measurement times and a counter (reportAmount) of a quantity of measurement times. The quantity of measurement times configured for the voice service may be 0, that is, measurement is not performed, to avoid that this time of handover of the terminal device to the target cell is counted into unnecessary handover.

According to the foregoing solution, the corresponding first signal quality threshold is set for the voice service, so that when the unnecessary handover is detected, detection may be performed based on first signal quality thresholds of different services. In this way, a possibility that handover of the terminal device to the target cell for service execution is incorrectly determined as unnecessary handover can be reduced.

Example 2: The first information includes first indication information.

The first indication information may indicate the first network device to detect, based on the second measurement result, whether handover of the terminal device to the target cell is unnecessary handover. The second measurement result includes the signal quality, of the cell using the second radio access technology, that is measured by the terminal device outside the duration of the voice service. For implementation, refer to Manner 1. Details are not described herein again.

In this embodiment of this application, a difference between Example 2 and Manner 1 lies in that in Manner 1, the first network device determines, by itself, to detect, based on the second measurement result, whether handover of the terminal device to the target cell is unnecessary handover; and in Example 2, the second network device indicates, by using the first indication information, the first network device to detect, based on the second measurement result, whether handover of the terminal device to the target cell is unnecessary handover. In Example 2, for an implementation in which the first network device detects, based on the second measurement result, whether handover of the terminal device to the target cell is unnecessary handover, refer to the implementation in Manner 1. Details are not described herein again. Based on Case 1 and Case 2 above, the unnecessary handover detection manner in this embodiment of this application is described.

**In** a possible implementation, when the first network device determines that handover of the terminal device to the target cell is unnecessary handover, the first network device may send the first report to the second network device, where the first report may indicate occurrence of the unnecessary handover. The first report may be used by the second network device to adjust the mobility parameter. For example, the second network device may adjust the mobility parameter based on the first report to increase the signal quality threshold of the handover cell. For example, after the first network device performs step S403, and detects that handover of the terminal device to the target cell is unnecessary handover, the method further includes S404: The first network device sends the first report to the second network device.

**In** a possible case, the first network device may include the related information of the voice service in the first report. The related information may include one or more of the identifier of the voice service, start time of the voice service, and end time of the voice service. For example, the first report may include the identifier of the voice service, to indicate that the terminal device is handed over to the target cell to perform the voice service. For another example, the first report may include the start time of the voice service, to indicate the start time at which the terminal device performs the voice service after the terminal device is handed over to the target cell. For another example, the first report may include the end time of the voice service, to indicate the end time of the voice service after the terminal device is handed over to the target cell. For another example, the first report may include the start time of the voice service and the end time of the voice service, to indicate the duration of the voice service after the terminal device is handed over to the target cell. For another example, the first report may include the identifier of the voice service, the start time of the voice service, and the end time of the voice service, to indicate that the terminal device is handed over to the target cell to perform the voice service, and indicate the duration of the voice service.

Based on the related information of the voice service, the second network device may determine whether the mobility parameter needs to be adjusted. For example, when the first report includes the related information of the voice service, the second network device may determine that the terminal device is handed over to the target cell to perform the voice service, that is, a procedure of the voice service triggers the terminal device to perform inter-system handover; and is not related to coverage and the mobility parameter of the second network device. Therefore, the second network device may not optimize the mobility parameter.

Optionally, the first network device may include the related information of the voice service in the first report based on an indication of the second network device. For example, the second network device may send second indication information to the first network device, and the second indication information may indicate to add the related information to the first report. **In** this case, the first network device may add the related information of the voice service to the first report based on the second indication information. Optionally, the second indication information may be carried in the handover request message.

According to the foregoing solution provided in this embodiment of this application, handover of the terminal device to the target cell is inter-system handover triggered by a procedure of the voice service, and is not related to coverage and an inter-system mobility parameter. According to the foregoing solution, time in which the terminal device performs the voice service can be prevented from being counted into unnecessary handover detection time, and a probability that handover of the terminal device is incorrectly determined as unnecessary handover can be reduced, to avoid unnecessary and invalid optimization performed by the second network device on the mobility parameter.

With reference to FIG. 7, the following describes in detail a cell handover method according to an embodiment of this application. FIG. 7 is an example flowchart of a cell handover method according to an embodiment of this application. The method may include the following operations. In the embodiment shown in FIG. 7, an example in which a first network device uses an LTE radio access technology and a second network device uses an NR radio access technology is used for description. For example, the first network device may be an eNodeB, and the second network device may be a gNodeB.

S701: The second network device triggers voice fallback, and determines the first network device.

A terminal device may request a 5GC to establish a voice session. When a source NR cell managed by the second network device does not support VoNR, the second network device returns a rejection to the 5GC, and indicates IMS voice fallback. The second network device may determine, based on a switch parameter configuration and a capability of the terminal device, whether to perform cell handover or redirection. The switch parameter configuration may include a feature preference of the terminal device, that is, when the source NR cell does not support VoNR, whether the terminal device prefers to be handed over to a cell or to be redirected. The capability of the terminal device may include whether the terminal device supports inter-system handover.

In this embodiment of this application, an example in which the second network device performs cell handover based on the switch parameter configuration and the capability of the terminal device is used for description. The second network device may determine the first network device that manages a target LTE cell.

S702: The second network device sends handover request information to the first network device.

Correspondingly, the first network device receives the handover request information from the second network device.

The handover request information may include a voice fallback indication. In a possible example, the second network device may send the handover request information to the 5GC through a next generation (next generation, NG) interface. The 5GC may forward context information of the terminal device to an evolved packet core (evolved packet core, EPC). The EPC may send the handover request information to the first network device through an S1 interface. The EPC may receive response information of the handover request information from the first network device. The response information may indicate that the terminal device is allowed to be handed over to a target cell. The EPC may forward the response information to the 5GC. The 5GC sends a handover command to the first network device, and the second network device may send the handover command to the terminal device, to indicate to hand over the terminal device from the source NR cell to the target LTE cell. The terminal device may perform cell handover to be handed over to the target LTE cell to perform a voice service.

In another possible example, the second network device may send the handover request information to the first network device through an X2 interface. The first network device sends response information of the handover request information to the second network device through the X2 interface. The response information may indicate that the terminal device is allowed to be handed over to a target cell. The second network device may send a handover command to the terminal device, to indicate to hand over the terminal device from the source NR cell to the target LTE cell. The terminal device may perform cell handover to be handed over to the target LTE cell to perform a voice service.

In the foregoing descriptions, the handover command may include related information of the target LTE cell and a voice fallback indication. The terminal device may be handed over to the target LTE cell, and the EPC may trigger establishment of a dedicated voice bearer with QCI=1. A subsequent procedure is the same as the VoLTE signaling procedure, and details are not described herein again.

Optionally, when a CU of the second network device is in an architecture in which a CU-CP and a CU-UP are split, and the CU-CP may be split into a CU-CP 1 and a CU-CP 2, the CU-CP 2 of the second network device sends a handover request to the first network device.

In a possible implementation, as shown in Case 2 above, the handover request information may include the first information. For the first information, refer to Example 1 and Example 2. Details are not described herein again.

S703: The first network device sends measurement configuration information to the terminal device.

Correspondingly, the terminal device receives the measurement configuration information from the first network device.

The measurement configuration information may indicate the terminal device to measure signal quality of the NR cell.

S704: The terminal device measures the signal quality of the NR cell based on the measurement configuration information.

S705: The terminal device sends a measurement report to the first network device.

Correspondingly, the first network device receives the measurement report from the terminal device.

The measurement report may include the signal quality of the NR cell. In a possible example, the measurement report may include a first measurement result in duration of the voice service and a second measurement result outside the duration of the voice service.

S706: The first network device detects, based on an unnecessary handover detection manner, whether handover of the terminal device to the target cell is unnecessary handover.

In a possible example, the first network device may determine, based on the first information, the unnecessary handover detection manner. In another possible example, the first network device may determine, by itself, the unnecessary handover detection manner. For an implementation in which the first network device detects whether handover of the terminal device to the target cell is unnecessary handover, refer to Manner 1 in Case 1, and Example 1 and Example 2 in Case 2 above. Details are not described herein again.

When the first network device detects that handover of the terminal device to the target cell is unnecessary handover, the method further includes S707: The first network device sends a first report to the second network device.

Correspondingly, the second network device receives the first report from the first network device.

The first report may indicate occurrence of unnecessary handover, and the first report may be used by the second network device to adjust a mobility parameter. The first report may include related information of the voice service. For example, the first network device may determine, by itself, to add the related information of the voice service to the first report. For another example, the first network device may determine, based on first indication information, to add the related information of the voice service to the first report, and the first indication information may be indicated by the second network device.

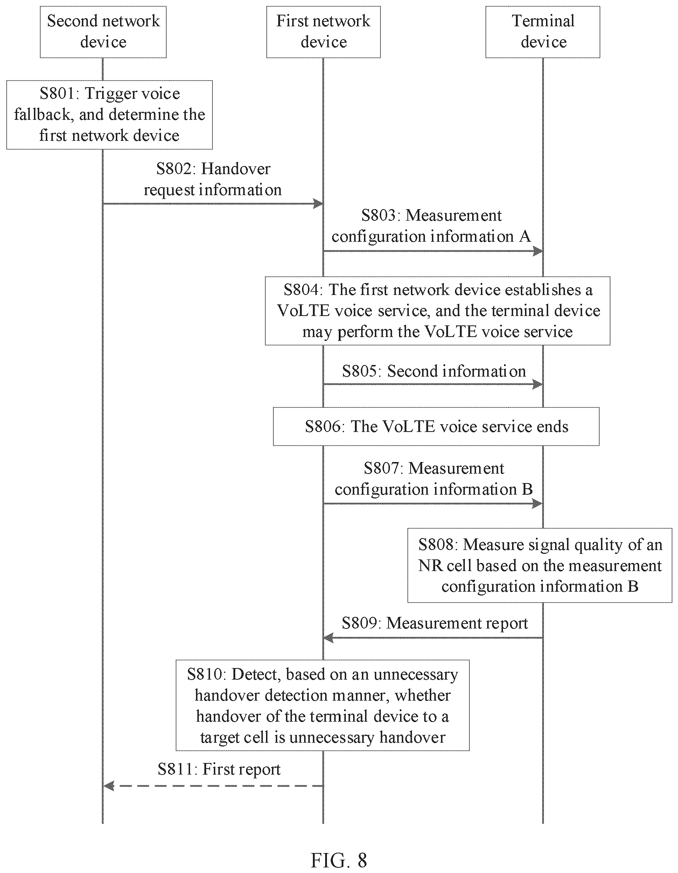

According to the embodiment shown in FIG. 7, Manner 1 in Case 1, and Example 1 and Example 2 in Case 2 above are described. The following describes Manner 2 in Case 1 above by using FIG. 8.

FIG. 8 is an example flowchart of a cell handover method according to an embodiment of this application. The method may include the following operations.

S801: A second network device triggers voice fallback, and determines a first network device.

S801 may be implemented with reference to S701.

S802: The second network device sends handover request information to the first network device.

Correspondingly, the first network device receives the handover request information from the second network device.

S802 may be implemented with reference to S702.

S803: The first network device sends measurement configuration information A to a terminal device.

Correspondingly, the terminal device receives the measurement configuration information A from the first network device.

The measurement configuration information A may indicate the terminal device to measure signal quality of an NR cell.

S804: The first network device establishes a VoLTE voice service, and the terminal device may perform the VoLTE voice service.

S805: The first network device sends second information to the terminal device.

Correspondingly, the terminal device receives the second information from the first network device.

The second information indicates that the measurement configuration information A is invalid. For the second information, refer to Manner 2 for implementation. Details are not described herein again.

S806: The VoLTE voice service ends.

S807: The first network device sends measurement configuration information B to the terminal device.

Correspondingly, the terminal device receives the measurement configuration information B from the first network device.

The measurement configuration information B may indicate the terminal device to measure the signal quality of the NR cell.

S808: The terminal device measures the signal quality of the NR cell based on the measurement configuration information B.

S809: The terminal device sends a measurement report to the first network device.

Correspondingly, the first network device receives the measurement report from the terminal device.

The measurement report may include the signal quality of the NR cell.

S810: The first network device detects, based on an unnecessary handover detection manner, whether handover of the terminal device to the target cell is unnecessary handover.

For example, the first network device may detect, based on the signal quality, of the NR cell, included in the measurement report, whether handover of the terminal device to the target cell is unnecessary handover. Refer to Manner 2 for implementation. Details are not described herein again.

S811: The first network device sends a first report to the second network device.

Correspondingly, the second network device receives the first report from the first network device.

For descriptions of the first report, refer to related content in step S707. Details are not described again. The following describes, with reference to the accompanying drawings, communication apparatuses, in embodiments of this application, configured to implement the foregoing methods. Therefore, all the foregoing content may be used in the following embodiments. Repeated content is not described again.

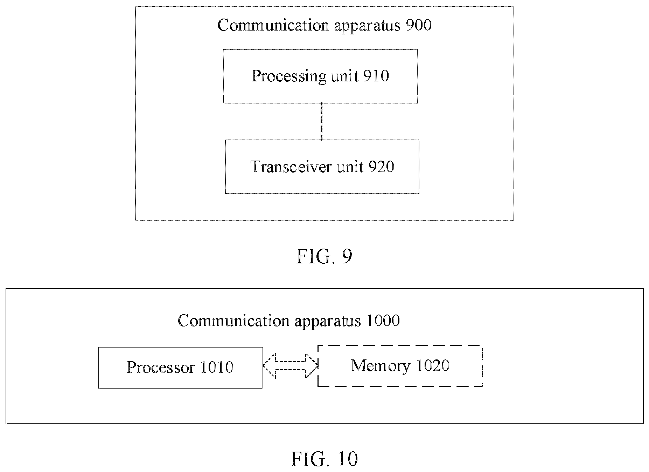

FIG. 9 is a block diagram of a communication apparatus 900 according to an embodiment of this application. The communication apparatus 900 may correspondingly implement functions or steps implemented by the first network device or the second network device in the foregoing method embodiments. The communication apparatus may include a processing unit 910 and a transceiver unit 920. Optionally, the communication apparatus may further include a storage unit. The storage unit may be configured to store instructions (code or a program) and/or data. The processing unit 910 and the transceiver unit 920 may be coupled to the storage unit. For example, the processing unit 910 may read the instructions (the code or the program) and/or the data in the storage unit, to implement a corresponding method. The foregoing units may be independently disposed, or may be partially or completely integrated.

In some possible implementations, the communication apparatus 900 can correspondingly implement behavior and functions of the first network device in the foregoing method embodiments. For example, the communication apparatus 900 may be the first network device, or may be a component (for example, a chip or a circuit) used in the first network device. The transceiver unit 920 may be configured to perform all receiving or sending operations performed by the first network device in the embodiment shown in FIG. 4, for example, S401 in the embodiment shown in FIG. 4, and/or another process used to support the technology described in this specification. The processing unit 910 is configured to perform all operations performed by the first network device in the embodiment shown in FIG. 4 except the receiving and sending operations, for example, S402, S403, and S404 in the embodiment shown in FIG. 4, and/or another process used to support the technology described in this specification.

For example, the transceiver unit 920 is configured to receive handover request information from a second network device, where the handover request information is used to request to hand over a terminal device to a target cell managed by the first network device to perform a first-type service. The first network device uses a first radio access technology, and a second network device uses a second radio access technology. The processing unit 910 is configured to determine an unnecessary handover detection manner related to the first-type service. The processing unit 910 is further configured to detect, based on the unnecessary handover detection manner, whether handover of the terminal device to the target cell is unnecessary handover.

**In** some possible implementations, the communication apparatus 900 can correspondingly implement behavior and functions of the second network device in the foregoing method embodiments. For example, the communication apparatus 900 may be the second network device, or may be a component (for example, a chip or a circuit) used in the second network device. The transceiver unit 920 may be configured to perform all receiving or sending operations performed by the second network device in the embodiment shown in FIG. 4, for example, S401 in the embodiment shown in FIG. 4, and/or another process used to support the technology described in this specification. The processing unit 910 is configured to perform all operations performed by the second network device in the embodiment shown in FIG. 4 except the receiving and sending operations, and/or another process used to support the technology described in this specification.

For example, the processing unit 910 is configured to determine handover request information. The transceiver unit 920 is configured to send the handover request information to a first network device, where the handover request information is used to request to hand over a terminal device to a target cell managed by the first network device to perform a first-type service. The first network device uses a first radio access technology, and a second network device uses a second radio access technology. The handover request information includes first information, and the first information is used to determine an unnecessary handover detection manner.

For operations performed by the processing unit 910 and the transceiver unit 920, refer to related descriptions in the foregoing method embodiments.

It should be understood that the processing unit 910 in this embodiment of this application may be implemented by a processor or a processor-related circuit component, and the transceiver unit 920 may be implemented by a transceiver, a transceiver-related circuit component, or a communication interface.

Based on a same concept, as shown in FIG. 10, an embodiment of this application provides a communication apparatus 1000. The communication apparatus 1000 includes a processor 1010. Optionally, the communication apparatus 1000 may further include a memory 1020, configured to: store instructions executed by the processor 1010, or store input data required by the processor 1010 to run instructions, or store data generated after the processor 1010 runs instructions. The processor 1010 may implement the method shown in the foregoing method embodiment by using the instructions stored in the memory 1020.

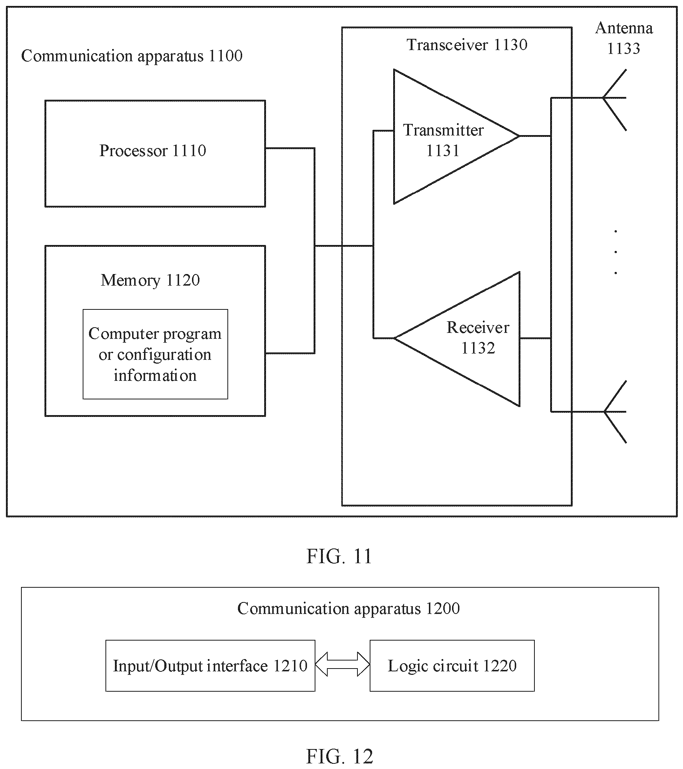

Based on a same concept, as shown in FIG. 11, an embodiment of this application provides a communication apparatus 1100. The communication apparatus 1100 may be a chip or a chip system. Optionally, in this embodiment of this application, the chip system may include a chip, or may include a chip and another discrete component.

The communication apparatus 1100 may include at least one processor 1110. The processor 1110 is coupled to a memory. Optionally, the memory may be located inside the apparatus, or may be located outside the apparatus. For example, the communication apparatus 1100 may further include at least one memory 1120. The memory 1120 stores a computer program, configuration information, a computer program or instructions, and/or data necessary for implementing any one of the foregoing embodiments. The processor 1110 may execute the computer program stored in the memory 1120, to complete the method in any one of the foregoing embodiments.

The coupling in embodiments of this application is an indirect coupling or a communication connection between apparatuses, units, or modules, or may be in an electrical form, a mechanical form, or another form, and is used for information exchange between the apparatuses, the units, or the modules. The processor 1110 may cooperate with the memory 1120. A specific connection medium between the transceiver 1130, the processor 1110, and the memory 1120 is not limited in embodiments of this application.

The communication apparatus 1100 may further include a transceiver 1130, and the communication apparatus 1100 may exchange information with another device through the transceiver 1130. The transceiver 1130 may be a circuit, a bus, a transceiver, or any other apparatus that can be configured to exchange information, or is referred to as a signal transceiver unit. As shown in FIG. 11, the transceiver 1130 includes a transmitter 1131, a receiver 1132, and an antenna 1133. In addition, when the communication apparatus 1100 is a chip-type apparatus or a circuit, the transceiver in the communication apparatus 1100 may alternatively be an input/output circuit and/or a communication interface, and may input data (or referred to as "receive data") and output data (or referred to as "send data"). The processor is an integrated processor, a microprocessor, or an integrated circuit, and the processor may determine outputted data based on inputted data.

In a possible implementation, the communication apparatus 1100 may be used in a first network device. Specifically, the communication apparatus 1100 may be the first network device, or may be an apparatus that can support the first network device to implement the functions of the first network device in any one of the foregoing embodiments. The memory 1120 stores a necessary computer program, a computer program or instructions, and/or data for implementing the functions of the first network device in any one of the foregoing embodiments. The processor 1110 may execute the computer program stored in the memory 1120, to complete the method performed by the first network device in any one of the foregoing embodiments.

In a possible implementation, the communication apparatus 1100 may be used in a second network device. Specifically, the communication apparatus 1100 may be the second network device, or may be an apparatus that can support the second network device to implement the functions of the second network device in any one of the foregoing embodiments. The memory 1120 stores a necessary computer program, a computer program or instructions, and/or data for implementing the functions of the second network device in any one of the foregoing embodiments. The processor 1110 may execute the computer program stored in the memory 1120, to complete the method performed by the second network device in any one of the foregoing embodiments.

The communication apparatus 1100 provided in this embodiment may be used in the first network device, to complete the method performed by the first network device, or may be used in the second network device, to complete the method performed by the second network device. Therefore, for technical effect that can be achieved by the communication apparatus, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 12. Based on the foregoing embodiments, an embodiment of this application further provides another communication apparatus 1200. The communication apparatus includes an input/output interface 1210 and a logic circuit 1220. The input/output interface 1210 is configured to receive code instructions and transmit the code instructions to the logic circuit 1220. The logic circuit 1220 is configured to run the code instructions to perform the method performed by the first network device or the second network device in any one of the foregoing embodiments.

The following describes in detail operations performed by the communication apparatus used in the first network device or the second network device.

In an optional implementation, the communication apparatus 1200 may be used in the first network device, to perform the method performed by the first network device, specifically, for example, the method performed by the first network device in the embodiment shown in FIG. 4.

The input/output interface 1210 is configured to input handover request information from a second network device, where the handover request information is used to request to hand over a terminal device to a target cell managed by the first network device to perform a first-type service. The first network device uses a first radio access technology, and a second network device uses a second radio access technology. The logic circuit 1220 is configured to determine an unnecessary handover detection manner related to the first-type service. The logic circuit 1220 is further configured to detect, based on the unnecessary handover detection manner, whether handover of the terminal device to the target cell is unnecessary handover.

The communication apparatus 1200 provided in this embodiment may be used in the first network device, to complete the method performed by the first network device. Therefore, for technical effect that can be achieved by the communication apparatus, refer to the foregoing method embodiments. Details are not described herein again.

In an optional implementation, the communication apparatus 1200 may be used in the second network device, to perform the method performed by the second network device, specifically, for example, the method performed by the second network device in the embodiment shown in FIG. 4.

The logic circuit 1220 is configured to determine handover request information. The input/output interface 1210 is configured to output the handover request information to a first network device, where the handover request information is used to request to hand over a terminal device to a target cell managed by the first network device to perform a first-type service. The first network device uses a first radio access technology, and a second network device uses a second radio access technology. The handover request information includes first information, and the first information is used to determine an unnecessary handover detection manner.

The communication apparatus 1200 provided in this embodiment may be used in the second network device, to complete the method performed by the second network device. Therefore, for technical effect that can be achieved by the communication apparatus, refer to the foregoing method embodiments. Details are not described herein again.

Based on the foregoing embodiments, an embodiment of this application further provides a communication system. The communication system includes at least one communication apparatus used in the first network device and at least one communication apparatus used in the second network device. For technical effect that can be achieved by the communication system, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the first network device or the method performed by the second network device in any one of the foregoing embodiments is implemented. The computer-readable storage medium may include any medium that can store program code, for example, a USB flash drive, a removable hard disk, a read-only memory, a random access memory, a magnetic disk, or an optical disc.

To implement the functions of the communication apparatuses in FIG. 9 to FIG. 12, an embodiment of this application further provides a chip. The chip includes a processor, configured to support the communication apparatus to implement the functions of the first network device or the second network device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specified function in one or more procedures in the flowcharts and/or in one or more blocks in the block diagrams.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this application may represent "and/or". For example, A/B represents A and/or B.

It should be understood that, in embodiments of the present invention, "B corresponding to A" indicates that B is associated with A, and B can be determined based on A. However, it should be further understood that determining B based on A does not mean that B is determined based only on A. B may alternatively be determined based on A and/or other information.

"A plurality of" in embodiments of this application refers to two or more than two.

Descriptions such as "first" and "second" in embodiments of this application are merely used for illustration and distinguishing between described objects, are not sequenced, do not represent a special limitation on a quantity of described objects in embodiments of this application, and do not constitute any limitation on embodiments of this application.

Mutual reference may be made to content in embodiments of this application. Unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that in embodiments of this application, the terminal device and/or the network device may perform some or all steps in embodiments of this application. These steps or operations are merely examples. In embodiments of this application, other operations or variations of various operations may be further performed. In addition, the steps may be performed in different sequences presented in embodiments of this application, and not all the operations in embodiments of this application may need to be performed.

## Claims

1. A cell handover method, comprising:
receiving, by a first network device, handover request information from the second network device, wherein the handover request information is used to request to hand over a terminal device to a target cell managed by the first network device to perform a first-type service, the first network device uses a first radio access technology, and the second network device uses a second radio access technology;
determining, by the first network device, an unnecessary handover detection manner related to the first-type service; and
detecting, by the first network device based on the unnecessary handover detection manner, whether handover of the terminal device to the target cell is unnecessary handover.

2. The method according to claim 1, further comprising:
receiving, by the first network device, first information from the second network device, wherein the first information is used to determine the unnecessary handover detection manner; and
the determining, by the first network device, an unnecessary handover detection manner related to the first-type service comprises:
determining, by the first network device based on the first information, the unnecessary handover detection manner.

3. The method according to claim 2, wherein the first information comprises an identifier of the first-type service and a first signal quality threshold corresponding to the identifier of the first-type service;
the determining, by the first network device based on the first information, the unnecessary handover detection manner comprises:
determining, by the first network device, to detect, based on the first signal quality threshold, whether handover of the terminal device to the target cell is unnecessary handover; and
the detecting, by the first network device based on the unnecessary handover detection manner, whether handover of the terminal device to the target cell is unnecessary handover comprises:
when signal quality of a cell using the second radio access technology is greater than or equal to the first signal quality threshold in a measurement periodicity, determining, by the first network device, that handover of the terminal device to the target cell is unnecessary handover.

4. The method according to claim 2, further comprising:
receiving, by the first network device, a measurement report from the terminal device, wherein the measurement report comprises a first measurement result, the first measurement result is signal quality of a cell using the second radio access technology, the first measurement result comprises a third measurement result in duration of the first-type service and a second measurement result, and the second measurement result does not comprise the third measurement result; and
the first information comprises first indication information, and the first indication information indicates to use the second measurement result to detect whether handover of the terminal device to the target cell is unnecessary handover;
the determining, by the first network device based on the first information, the unnecessary handover detection manner comprises:
determining, by the first network device, to detect, based on the second measurement result, whether handover of the terminal device to the target cell is unnecessary handover; and
the detecting, by the first network device based on the unnecessary handover detection manner, whether handover of the terminal device to the target cell is unnecessary handover comprises:
when the signal quality comprised in the second measurement result is greater than or equal to a second signal quality threshold in a measurement periodicity, determining, by the first network device, that handover of the terminal device to the target cell is unnecessary handover.

5. The method according to claim 1, further comprising:
receiving, by the first network device, a measurement report from the terminal device, wherein the measurement report comprises a first measurement result, the first measurement result is signal quality of a cell using the second radio access technology, the first measurement result comprises a third measurement result in duration of the first-type service and a second measurement result, and the second measurement result does not comprise the third measurement result;
the determining, by the first network device, an unnecessary handover detection manner related to the first-type service comprises:
determining, by the first network device, to detect, based on the second measurement result, whether handover of the terminal device to the target cell is unnecessary handover; and
the detecting, by the first network device based on the unnecessary handover detection manner, whether handover of the terminal device to the target cell is unnecessary handover comprises:
when the signal quality comprised in the second measurement result is greater than or equal to a second signal quality threshold in a measurement periodicity, determining, by the first network device, that handover of the terminal device to the target cell is unnecessary handover.

6. The method according to claim 1 or 2, further comprising:
sending, by the first network device, a first report to the second network device, wherein the first report indicates occurrence of the unnecessary handover, and the first report is used by the second network device to adjust a mobility parameter; and
the first report comprises related information of the first-type service, and the related information comprises one or more of an identifier of the first-type service, start time of the first-type service, and end time of the first-type service.

7. The method according to claim 6, further comprising:
receiving, by the first network device, second indication information from the second network device, wherein the second indication information indicates to add the related information to the first report.

8. The method according to claim 1, further comprising:
sending, by the first network device, first measurement configuration information to the terminal device after the first-type service ends, wherein the first measurement configuration information indicates the terminal device to measure signal quality of a cell using the second radio access technology.

9. The method according to claim 8, further comprising:
receiving, by the first network device, a third measurement result from the terminal device, wherein the third measurement result comprises the signal quality of the cell using the second radio access technology;
the determining, by the first network device, an unnecessary handover detection manner related to the first-type service comprises:
determining, by the first network device, to detect, based on the third measurement result, whether handover of the terminal device to the target cell is unnecessary handover; and
the detecting, by the first network device based on the unnecessary handover detection manner, whether handover of the terminal device to the target cell is unnecessary handover comprises:
when the signal quality comprised in the third measurement result is greater than or equal to a second signal quality threshold in a measurement periodicity, determining, by the first network device, that handover of the terminal device to the target cell is unnecessary handover.

10. The method according to claim 8, further comprising:
sending, by the first network device, second information to the terminal device, wherein the second information indicates that second measurement configuration information is invalid, and the second measurement configuration information indicates the terminal device to measure, in duration of the first-type service, the signal quality of the cell using the second radio access technology.

11. The method according to claim 10, wherein the second information further indicates the terminal device to stop measuring the signal quality of the cell using the second radio access technology, and/or the second information further indicates the terminal device not to send a measurement report corresponding to the second measurement configuration information.

12. A cell handover method, comprising:
sending, by a second network device, handover request information to a first network device, wherein the handover request information is used to request to hand over a terminal device to a target cell managed by the first network device to perform a first-type service, the first network device uses a first radio access technology, and the second network device uses a second radio access technology; and
the handover request information comprises first information, and the first information is used to determine the unnecessary handover detection manner.

13. The method according to claim 12, wherein the first information comprises an identifier of the first-type service and a first signal quality threshold corresponding to the identifier of the first-type service; and
the unnecessary handover detection manner comprises: detecting, based on the first signal quality threshold, whether handover of the terminal device to the target cell is unnecessary handover.

14. The method according to claim 12, wherein the first information comprises first indication information, the first indication information indicates to use a second measurement result to detect whether handover of the terminal device to the target cell is unnecessary handover, and the second measurement result does not comprise a measurement result in duration of the first-type service; and
the unnecessary handover detection manner comprises: detecting, based on the second measurement result, whether handover of the terminal device to the target cell is unnecessary handover.

15. The method according to claim 12, further comprising:
receiving, by the second network device, a first report from the first network device, wherein the first report indicates occurrence of unnecessary handover, and the first report is used by the second network device to adjust a mobility parameter; and
the first report comprises related information of the first-type service, and the related information comprises one or more of an identifier of the first-type service, start time of the first-type service, and end time of the first-type service.

16. The method according to claim 15, wherein the first information comprises second indication information, and the second indication information to add the related information to the first report.

17. A communication apparatus, comprising a unit configured to perform the method according to any one of claims 1 to 11.

18. A communication apparatus, comprising a unit configured to perform the method according to any one of claims 12 to 16.

19. A communication apparatus, comprising: a processor and a memory, wherein
the memory is configured to store a computer program or instructions; and
the processor is configured to execute the computer program or the instructions in the memory, so that the apparatus performs the method according to any one of claims 1 to 11, or the apparatus performs the method according to any one of claims 12 to 16.

20. A computer-readable storage medium, wherein the computer-readable storage medium stores computer-executable instructions; and when the computer-executable instructions are invoked by an electronic apparatus, the electronic apparatus performs the method according to any one of claims 1 to 11 or the electronic apparatus performs the method according to any one of claims 12 to 16.

21. A computer program product, comprising computer-executable instructions, wherein when the computer-executable instructions are run on a computer, the computer performs the method according to any one of claims 1 to 11, or the electronic apparatus performs the method according to any one of claims 12 to 16.
